# EUROPÄISCHE PATENTANMELDUNG

(11) **EP 3 332 900 A1**
(43) Veröffentlichungstag der Anmeldung: **13.06.2018**
(21) Anmeldenummer: 17205240.9
(22) Anmeldetag: 04.12.2017
(51) Int. Cl.: B23B 39/16, B23B 41/02

(54) **VERFAHREN SOWIE WERKZEUGMASCHINE ZUM SPANENDEN BEARBEITEN EINES WERKSTÜCKS**

(30) Priorität: 06.12.2016 DE 102016123572
(71) Anmelder: ELHA-Maschinenbau Liemke KG, 33161 Hövelhof (DE)
(72) Erfinder: WOLKE, Meinolf, 33129 Delbrück (DE)
(74) Vertreter: Dantz, Jan Henning

(57) **Zusammenfassung**

Ein Verfahren zum spanenden Bearbeiten mindestens eines schlanken, insbesondere geschmiedeten Werkstücks (15), in das entlang einer Längsachse durch Tieflochbohren eine Zentralbohrung (18) und in mindestens einen seitlich vorstehenden Anschlussnippel (17) eine Anschlussbohrung (19) eingebracht werden, ist so ausgebildet, dass in das Werkstück (15) in einer einzigen Einspannposition sowohl die Zentralbohrung (18) wie auch die Anschlussbohrung (19) gebohrt werden

## Beschreibung

Die Erfindung betrifft ein Verfahren zum spanenden Bearbeiten mindestens eines schlanken, insbesondere geschmiedeten Werkstücks nach dem Oberbegriff des Anspruchs 1 sowie eine Werkzeugmaschine nach dem Oberbegriff des Anspruchs 7.

Insbesondere in Einspritzsystemen von Motoren kommen Werkstücke zum Einsatz, die aus einem geschmiedeten, hochfesten Stahl hergestellt sind, dies vor allem deshalb, weil das Werkstück als Kraftstoffverteiler durch systembedingt hohe Betriebsdrücke belastet werden.

Dabei ist ein solcher Verteiler in seiner Raumform schlank dimensioniert, d.h. als stangenförmiger, üblicherweise im Wesentlichen im Querschnitt runder Grundkörper mit radial angeformten Anschlussnippeln.

Zur Bereitstellung seiner Verteilerfunktion muss der Grundkörper entlang seiner Längsachse mit einer Zentralbohrung versehen werden, was mittels Tieflochbohren erfolgt, während gleichfalls die Anschlussnippel jeweils ebenfalls zentral mit einer Bohrung versehen werden, die radial in die Zentralbohrung münden.

Um die Tieflochbohrung durchführen zu können, ist vielfach zumindest von der Einstichseite des Tieflochbohrers her eine spanende Endbearbeitung des Grundkörpers erforderlich, die üblicherweise durch Drehen, Fräsen oder Bohren erfolgt.

Für die einzelnen Arbeitsgänge, d.h. im Bedarfsfall zunächst die Endenbearbeitung des Grundkörpers, danach das Tieflochbohren und schließlich das Einbringen der Anschlussbohrungen kommen bislang unterschiedliche, auf den jeweiligen Bearbeitungsfall angepasste Werkzeugmaschinen zum Einsatz, wobei für jeden Bearbeitungsschritt der Rohling in der entsprechenden Werkzeugmaschine eingespannt werden muss.

Naturgemäß ist dies mit einem erheblichen Arbeitsaufwand verbunden, da das Werkstück nach der ersten Bearbeitungsstufe aus einer Spannvorrichtung entnommen, in eine Spannvorrichtung der zweiten Werkzeugmaschine eingespannt und gegebenenfalls in gleicher Weise in einer dritten Werkzeugmaschine positioniert werden muss.

Dabei bestimmt der arbeitsbedingt längste Bearbeitungsrhythmus die Dauer der Fertigung und damit die Anzahl der zeitgleich im Einsatz befindlichen Spindeln, was letztendlich bedeutet, dass die Werkzeugmaschine mit kürzerer Bearbeitungszeit über einen entsprechenden Zeitraum nicht im Einsatz ist bzw. mehrfach vorhanden sein muss.

Alles in allem stellt sich die bisherige Art der Fertigung der beschriebenen Werkstücke als hinsichtlich einer steten Forderung nach einer Kostenoptimierung äußerst nachteilig dar.

Darüber hinaus sind die qualitativen Ansprüche an insbesondere die erwähnte Verteilereinrichtung, wenn überhaupt, so nur unbefriedigend zu erfüllen. Hierzu tragen vor allem die für jeden Arbeitsgang erforderlichen separaten Einspannungen des Werkstücks bei, die zwangsläufig zu Bearbeitungsungenauigkeiten führen.

Durch den Schmiedevorgang ergeben sich vielfach im Übergangsbereich des Grundkörpers zu den Anschlussnippeln Materialverfestigungen, die sich beim Tieflochbohren insofern nachteilig auswirken, als dadurch der Tieflochbohrer in seiner axialen Führung ausgelenkt wird, so dass sich unter Umständen ein nicht exakt axialer Verlauf der Tieflochbohrung ergibt, was den geforderten Toleranzansprüchen nicht genügt.

Der Erfindung liegt die Aufgabe zugrunde, ein Verfahren der gattungsgemäßen Art so weiterzuentwickeln, dass es kostengünstiger durchführbar und die Qualität des hergestellten Werkstücks verbessert wird.

Diese Aufgabe wird durch ein Verfahren mit den Merkmalen des Anspruchs 1 sowie durch eine Werkzeugmaschine mit den Merkmalen des Anspruchs 7 gelöst.

Durch die Erfindung ergeben sich eine ganze Reihe von Vorteilen, da nunmehr keine Umspann-Ungenauigkeiten bei der Bearbeitung auftreten und überdies die Bearbeitung in deutlich kürzerer Zeit möglich ist.

Überdies erfolgt die erfindungsgemäße Bearbeitung in lediglich einer Werkzeugmaschine und nicht, wie zum Stand der Technik beschrieben, in mehreren.

Nach einem weiteren Gedanken der Erfindung erfolgt die Tieflochbohrung in vertikaler Richtung, wodurch ein negativer Einfluss durch die Gravitation ausgeschlossen ist.

Bevorzugt wird das Werkstück zum Einbringen der Zentralbohrung gegen einen rotierenden, axial fest stehenden Tieflochbohrer und zum Einbringen der Anschlussbohrung gegen ein rotierendes, axial feststehendes Zerspanungswerkzeug, insbesondere einen Bohrer, verfahren.

Hierzu ist das Werkstück an einer in X- Y- Z-Richtung verfahrbaren Pinole gehalten, die überdies rotierend bewegbar sein kann, so dass das Werkstück gegen die insoweit fest stehenden Zerspanungswerkzeuge verfahrbar ist.

Ein weiterer Vorteil insbesondere beim Tieflochbohren ergibt sich durch ein Drehen des Werkstücks entgegen der Drehrichtung des Tieflochbohrers, wobei die Drehzahl des Werkstücks bevorzugt im Bereich von 40 bis 200 min⁻¹ liegt.

Um eine gesteuerte Beeinflussung des Bohrungsverlaufs insbesondere der Tieflochbohrung erreichen zu können, wodurch gleichfalls eine erhöhte Fertigungsgenauigkeit erreicht wird, ist ein Versatz der den Tieflochbohrer antreibenden Antriebsspindel zur Bohrungsache in Abhängigkeit zur Bohrtiefe programmierbar.

Im Fall einer kontinuierlichen Bohrerabdrängung, wie sie durch die erwähnten unterschiedlichen Materialeigenschaften eintreten kann, ist ein schräges Anbohren, vorzugsweise numerisch (NC) gesteuert möglich. Während bisher zur Führung des Tieflochbohrers eine Bohrbuchse zum Einsatz kommt, allerdings mit dem Nachteil, dass eine Korrektur im Bohrungsverlauf nicht möglich ist, kann erfindungsgemäß eine Pilotbohrung eingebracht werden, um eine exakte Positionierung der nachfolgend zu bearbeitenden Werkstücke durchzuführen.

Eine Werkzeugmaschine zur Durchführung des Verfahrens weist ein Maschinengestell auf, mit einer Mehrzahl gegenüber dem Maschinengestell translatorisch fest stehender Werkzeugköpfe mit jeweils mehreren, spindelgelagerten und antreibbaren Zerspanungswerkzeugen. Dabei sind diese Werkzeugköpfe im Sinne von Werkzeugrevolvern ausgebildet. Eine Werkzeugmaschine entsprechend der Gattung ist in der EP 3 031 576 A1 thematisiert, so dass auf diese Literatur ausdrücklich verwiesen wird.

Gemäß der Erfindung ist diese Werkzeugmaschine zur Durchführung des Verfahrens derart weiterentwickelt, dass neben den drehbaren Werkzeugköpfen, die jeweils axial hintereinander liegend eine Reihe von Werkzeugen aufweisen, die wiederum jeweils umfänglich in einer Revolveranordnung positioniert sind, ein weiterer starr stehender Werkzeugkopf mit Tieflochbohrern vorgesehen ist, die jeweils vertikal ausgerichtet sind.

Überdies ist, nach einem weiteren Gedanken der Erfindung, der Werkstückträger mit mindestens einer Werkstückaufnahme ausgestattet, wobei der Werkstückträger stirnseitig an der bereits erwähnten Pinole befestigt ist und wobei die als Spanneinrichtung ausgebildete Werkstückaufnahme rotierend antreibbar ist.

Bevorzugt sind in Achsrichtung der im Sinne eines Kragarmes, d.h. als einseitig eingespannter Träger ausgebildeten Pinole mehrere Werkstückaufnahmen hintereinander positioniert, so dass gleichzeitig eine entsprechende Anzahl sowohl mittels der Tieflochbohrer wie auch mittels Radialbohrer bearbeitet werden kann, wobei die Radialbohrer oder andere spangebende Werkzeuge in den Revolverköpfen angeordnet sind.

Der Einsatz der neuen Werkzeugmaschine gestaltet sich auch insoweit als besonders vorteilhaft, als, je nach Anforderung, sowohl sogenannte Einlippentieflochbohrer wie auch zweischneidige, gewendelte Tieflochbohrer einsetzbar sind.

Überdies ist die Reihenfolge der Bearbeitungsschritte frei wählbar, d.h., es können beispielsweise zunächst die Tieflochbohrungen und anschließend die Radialbohrungen eingebracht werden und im Anschluss an die Radialbohrungen könnte ggfs. erneut in die Tieflochbohrung eingefahren werden, um ggfs. entstandene Bohrungsdeckel zu entfernen.

Durch die Konzeption der neuen Werkzeugmaschine befinden sich der die Tieflochbohrer aufnehmende Werkzeugkopf zwischen drei vertikalen Antriebsachsen, wodurch ein Aufbiegen der Maschinenstruktur vermieden wird, was gleichfalls zu einer Bearbeitungsgenauigkeit beiträgt.

Weitere vorteilhafte Ausbildungen der Erfindung sind in den Unteransprüchen gekennzeichnet.

Das erfindungsgemäße Verfahren sowie eine Werkzeugmaschine zur Durchführung des Verfahrens werden nachfolgend anhand der beigefügten Zeichnungen nochmals beschrieben.

Es zeigen:
- Figuren 1 und 2: eine erfindungsgemäße Werkzeugmaschine in unterschiedlichen Arbeitsstellungen, jeweils in einer perspektivischen Vorderansicht

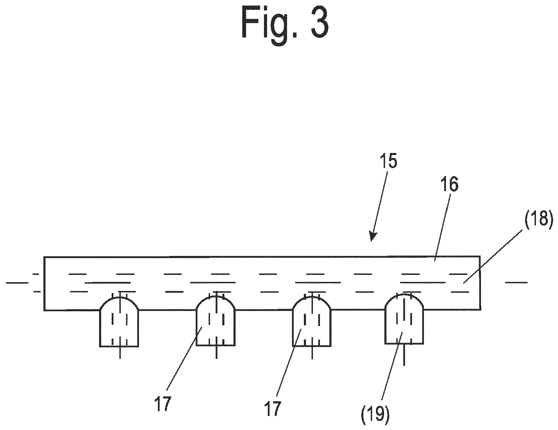

- Figur 3: ein mittels des Verfahrens hergestelltes Werkstück in einer Seitenansicht.

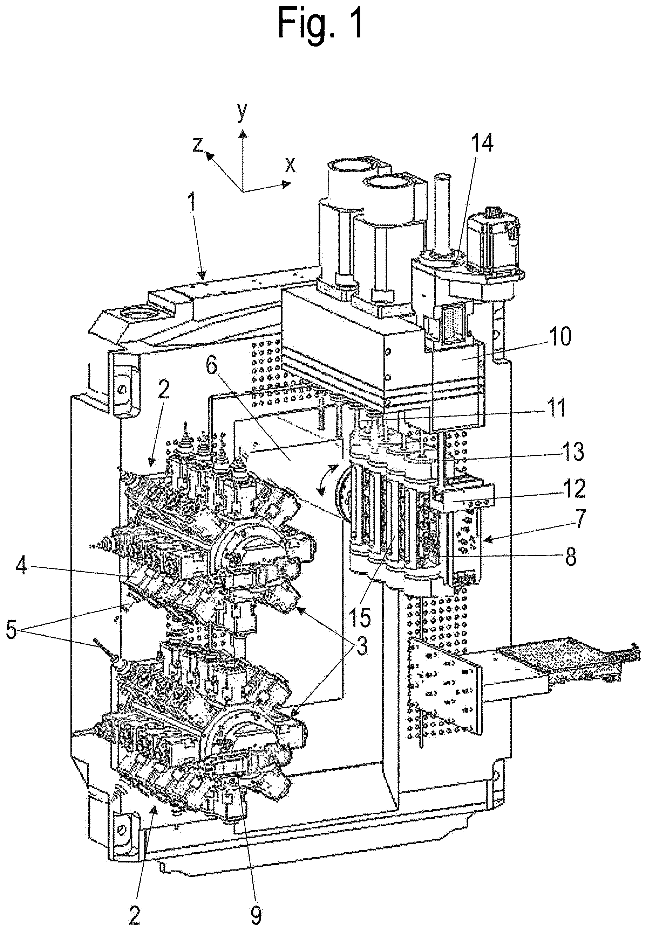

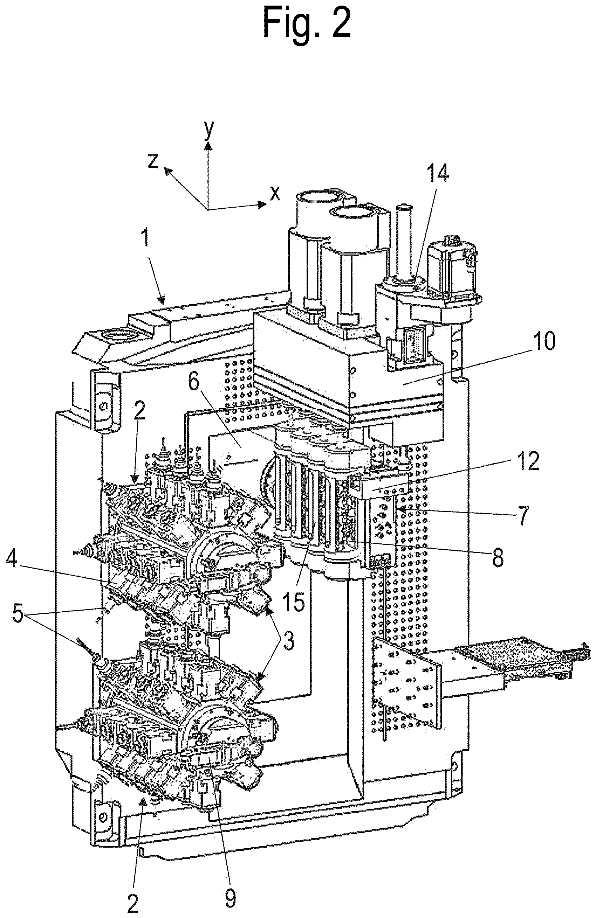

In den Figuren 1 und 2 ist eine Werkzeugmaschine abgebildet zum spanenden Bearbeiten mehrerer, schlanker, insbesondere geschmiedeter Werkstücke 15, von denen eines in der Figur 5 beispielhaft dargestellt ist.

Dieses Werkstück 15 besteht aus einem rohrförmigen Grundkörper 16, in den entlang einer Längsachse durch Tieflochbohren eine Zentralbohrung 18 sowie in seitlich angeformte Anschlussnippel 17 jeweils eine Anschlussbohrung 19 eingebracht sind. Dieses Werkstück 15, das in seiner Funktion ein Verteilerrohr für eine Einspritzeinrichtung, vor allem für einen Dieselmotor bildet, besteht aus einem hochfesten Stahl, um Betriebsdrücken von > 2000 bar standhalten zu können. Dabei sind die Anschlussnippel 17 und der Grundkörper 16 einstückig ausgebildet. Werkstücke für Benzinmotoren müssen Betriebsdrücken von > 200 bar standhalten.

Die in den Figuren 1 und 2 erkennbare Werkzeugmaschine weist ein Maschinengestell 1 auf, an dem im Beispiel zwei translatorisch fest stehende Werkzeugköpfe 2 angeordnet sind, die jeweils mit mehreren in Achsrichtung hintereinander angeordneten Revolverköpfen 3 bestückt sind.

Jeder Werkzeugkopf 2, der im Sinne eines Revolverkopfes ausgebildet ist, ist mit Werkzeugspindeln 4 bestückt, die der Aufnahme von antreibbaren Zerspanungswerkzeugen bzw. Radialbohrern 5 dienen.

Weiter weist die Werkzeugmaschine einen Werkstückträger 7 auf, der stirnseitig an einer im Sinne eines Kragarmes vorstehenden Pinole 6 gehalten ist, die relativ zum Maschinengestell 1 in X- Y und Z-Richtung verfahrbar ist, ebenso um ihre Längsachse drehbar, entsprechend der Pfeilangabe.

Der Werkstückträger 7 ist in Achsrichtung der Pinole 6 gesehen mit mehreren hintereinander angeordneten Spanneinrichtungen 8 versehen, in denen jeweils ein Werkstück 15 eingespannt ist. Dabei ist jede Spanneinrichtung 8 mittels eines Antriebs um die Zentralachse des Werkstücks 15 rotierend antreibbar.

Oberhalb des Werkstückträgers 7 ist ein, gegenüber dem Maschinengestell 1, gleichfalls fest stehender weiterer Werkzeugkopf 10 angeordnet, in dem antreibbare Tieflochbohrer 11, bevorzugt vertikal ausgerichtet, angeordnet sind.

Denkbar ist auch eine horizontale oder winklige Ausrichtung der Tieflochbohrer 11.

In der Figur 1 ist eine Position des Werkstückträgers 7 abgebildet, in der die Tieflochbohrer 11 bzw. die Radialbohrer 5 noch nicht im Einsatz sind.

In dieser Stellung wird der Werkstückträger 7 mittels einer angeschlossenen Halteaufnahme 12 in Eingriff gebracht mit einer Haltestange 13, die am Werkzeugkopf 10 befestigt ist, wodurch eine Abstützung des Werkstückträgers 7 erreicht wird, wenn die Tieflochbohrer 11 spanend in Eingriff mit den Werkstücken 15 gelangen.

Dabei ist die Haltestange 13 Bestandteil eines Antriebs 14 in Form eines Spindeltriebs.

In der Figur 2 ist eine Stellung des Werkstückträgers 7 gezeigt, in der die Werkstücke 15 mit den Tieflochbohrern 11 fluchten, jedoch ohne damit in Eingriff zu stehen.

In einer Einspannposition können die Werkstücke 15 in jede der angegebenen Richtungen verfahren werden, wobei zur spanenden Bearbeitung die Pinole 6 und damit der Werkstückträger 7 und die Spanneinrichtungen 8 gegen die rotierend angetriebenen Zerspanungswerkzeuge, d.h. die Radialbohrer 5 und die Tieflochbohrer 11 verfahren werden, im Fall der Tieflochbohrung derart, dass die Werkstücke 15 gleichfalls um ihre Längsachse rotieren, bevorzugt entgegengesetzt zur Drehrichtung der Tiefbohrer 11.

Zur Verdrehung des jeweiligen, im Sinne eines Werkzeugrevolvers ausgebildeten Werkzeugkopfes 2 ist daran stirnseitig ein Antriebsmotor 9, durch den der Werkzeugkopf 2 in getakteten Schritten verdreht werden kann, wobei die Werkzeugköpfe 2 parallel zur Pinole 6 ausgerichtet gleichfalls im Sinne eines Kragarmes hervorstehen und zwar achsparallel.

### Bezugszeichenliste

- 1: Maschinengestell
- 2: Werkzeugkopf
- 3: Revolverkopf
- 4: Werkzeugspindel
- 5: Radialbohrer
- 6: Pinole
- 7: Werkstückträger
- 8: Spanneinrichtung
- 9: Antriebsmotor
- 10: Werkzeugkopf
- 11: Tieflochbohrer
- 12: Halteaufnahme
- 13: Haltestange
- 14: Antrieb
- 15: Werkstück
- 16: Grundkörper
- 17: Anschlussnippel
- 18: Zentralbohrung
- 19: Anschlussbohrung

## Patentansprüche

1. Verfahren zum spanenden Bearbeiten mindestens eines schlanken, insbesondere geschmiedeten Werkstücks (15), in das entlang einer Längsachse durch Tieflochbohren eine Zentralbohrung (18) und in mindestens einen seitlich vorstehenden Anschlussnippel (17) eine Anschlussbohrung (19) eingebracht werden, **dadurch gekennzeichnet, dass** in das Werkstück (15) in einer einzigen Einspannposition sowohl die Zentralbohrung (18) wie auch die Anschlussbohrung (19) gebohrt werden.

2. Verfahren nach Anspruch 1, **dadurch gekennzeichnet, dass** das Werkstück (15) zum Einbringen der Zentralbohrung (18) gegen einen rotierenden, axial fest stehenden Tieflochbohrer (11) und zum Einbringen der Anschlussbohrung (19) gegen ein rotierendes axial fest stehendes Zerspanungswerkzeug, insbesondere einen Bohrer (5) verfahren wird.

3. Verfahren nach Anspruch 1 oder 2, **dadurch gekennzeichnet, dass** die Zentralbohrung (18) in vertikaler Richtung erfolgt.

4. Verfahren nach einem der vorhergehenden Ansprüche, **dadurch gekennzeichnet, dass** das eingespannte Werkstück (15) während des Tieflochbohrens, vorzugsweise entgegen der Drehrichtung des Tieflochbohrers (11), rotierend angetrieben wird.

5. Verfahren nach einem der vorhergehenden Ansprüche, **dadurch gekennzeichnet, dass** der vertikale und/oder radiale Vorschub des Werkstücks (15) entsprechend der zunehmenden Bohrtiefe verändert wird.

6. Verfahren nach einem der vorhergehenden Ansprüche, **dadurch gekennzeichnet, dass** in der einzigen Einspannposition vor dem Einbringen der Zentralbohrung (18) zumindest eine Stirnseite des Werkstücks (15) spanend bearbeitet wird.

7. Werkzeugmaschine, mit einem Maschinengestell (1), einer Mehrzahl von gegenüber dem Maschinengestell (1) translatorisch fest stehenden Werkzeugköpfen (2, 10) mit jeweils mehreren, antreibbaren Zerspanungswerkzeugen sowie einer mehrachsig translatorisch zu den Werkzeugköpfen (2, 10) hin sowie um eine Längsachse schwenkbar bewegbaren Pinole (6), die im Sinne eines Kragarmes vorsteht und an der stirnseitig ein Werkstückträger (7) mit mindestens einer Spanneinrichtung (8) befestigt ist, **dadurch gekennzeichnet, dass** ein Werkzeugkopf (10) mindestens einen Tieflochbohrer (11) aufweist.

8. Werkzeugmaschine nach Anspruch 7, **dadurch gekennzeichnet, dass** der wenigstens eine Tieflochbohrer (11) vertikal ausgerichtet ist.

9. Werkzeugmaschine nach Anspruch 7 oder 8, **dadurch gekennzeichnet, dass** ein weiterer Werkzeugkopf (2) mindestens einen Radialbohrer (5) aufweist, zum Einbringen der Anschlussbohrung (19) in das Werkstück (15).

10. Werkzeugmaschine nach einem der Ansprüche 7 bis 9, **dadurch gekennzeichnet, dass** die Spanneinrichtung (8) um eine vertikale Achse rotierend antreibbar ist, vorzugsweise gegenläufig zur Drehbewegung des Tieflochbohrers (11).

11. Werkzeugmaschine nach einem der Ansprüche 7 bis 10, **dadurch gekennzeichnet, dass** am Werkstückträger (7) eine Halteaufnahme (12) vorgesehen ist, die in Funktion des Tieflochbohrers (11) in Eingriff mit einer Haltestange (13) steht.

12. Werkzeugmaschine nach einem der Ansprüche 7 bis 11, **dadurch gekennzeichnet, dass** die Haltestange (13) axial über einen ortsfesten Antrieb (14), vorzugsweise einen Spindelantrieb bewegbar ist.
